(19) Europäisches Patentamt
European Patent Office
Office européen des brevets

(11) Veröffentlichungsnummer: **0 170 157**
**B1**

# (12) EUROPÄISCHE PATENTSCHRIFT

(45) Veröffentlichungstag der Patentschrift: **05.10.88**

(51) Int. Cl.⁴: **C 07 D 333/26**, C 09 B 56/16, D 06 P 3/52, D 06 P 1/18 // C09B29/033

(21) Anmeldenummer: **85108898.9**

(22) Anmeldetag: **16.07.85**

## (54) Methinfarbstoffe.

(30) Priorität: **24.07.84 DE 3427200**

(43) Veröffentlichungstag der Anmeldung: **05.02.86 Patentblatt 86/6**

(45) Bekanntmachung des Hinweises auf die Patenterteilung: **05.10.88 Patentblatt 88/40**

(84) Benannte Vertragsstaaten: **CH DE FR GB IT LI**

(56) Entgegenhaltungen:
**CH - A - 631 197**
**DE - A - 2 759 103**

(73) Patentinhaber: **BASF Aktiengesellschaft, Carl-Bosch-Strasse 38, D-6700 Ludwigshafen (DE)**

(72) Erfinder: **Bergmann, Udo, Dr., Merckstrasse 26, D-6100 Darmstadt (DE)**
Erfinder: **Hahn, Erwin, Dr., Am Buechsenackerhang 31, D-6900 Heidelberg (DE)**
Erfinder: **Hansen, Guenther, Dr., Alwin-Mittasch-Platz 8, D-6700 Ludwigshafen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Die Erfindung betrifft Verbindungen der allgemeinen Formel I

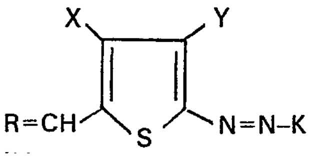

I

in der

K der Rest einer Kupplungskomponente,

R der Rest einer methylenaktiven Verbindung,

X Wasserstoff oder gegebenenfalls substituiertes Alkyl, Aryl oder Hetaryl und

Y Cyan, Nitro, Alkanoyl, Aroyl, Alkylsulfonyl, Arylsulfonyl, Carboxyl, Carbonester oder gegebenenfalls substituiertes Carbamoyl sind.

Reste X sind neben Wasserstoff z.B. $C_1$- bis $C_8$-Alkyl, das noch durch Chlor, Brom oder Phenyl substituiert sein kann oder gegebenenfalls durch Chlor, Brom, Methyl, Ethyl, Methoxy, Ethoxy oder Nitro substituiertes Phenyl, Thienyl oder Furyl.

Einzelne Alkylreste sind z.B.:

$CH_3$, $C_2H_5$, $C_3H_7$, $C_4H_9$, $C_5H_{11}$, $C_6H_{13}$, $C_8H_{17}$ oder

$CH_2CH{<}^{C_2H_5}_{C_4H_9}$ ,

wobei durch die abgekürzte Formel auch die n- und i-Reste umfasst sind. Einzelne Reste Y sind neben den bereits genannten z.B.:

$CH_3CO$, $C_2H_5CO$, $C_3H_7CO$, $C_4H_9CO$, $C_5H_{11}CO$, $C_7H_{15}CO$, $OCCH{<}^{C_2H_5}_{C_4H_9}$ , $C_5H_5CO$, $CH_3C_6H_4CO$, $ClC_6H_4CO$, $(CH_3)_2C_6H_3CO$, $H_3COC_6H_4CO$, $Cl_2C_6H_3CO$, $CH_3SO_2$, $C_2H_5SO_2$, $C_4H_9SO_2$, $C_6H_5SO_2$, $CH_3C_6H_4SO_2$, $ClC_6H_4SO_2$, $COOCH_3$, $COOC_2H_5$, $COOC_3H_7$, $COOC_4H_9$, $COOC_6H_{13}$, $COOC_8H_{17}$, $COOCH_2CH{<}^{C_2H_5}_{C_4H_9}$ , $COOC_2H_4OCH_3$, $COOC_2H_4OC_2H_5$, $COOC_2H_4OC_4H_9$, $COOC_6H_5$, $COOC_6H_4CH_3$, $CONH_2$, $CONHCH_3$, $CONHC_2H_5$, $CONHC_4H_9$, $CONHC_6H_{13}$, $CONHC_8H_{17}$, $CON(CH_3)_2$, $CON(C_2H_5)_2$, $CON(C_4H_9)_2$, $CON{<}^{CH_3}_{C_2H_5}$ ,

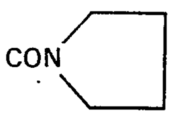 , 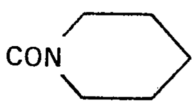 oder 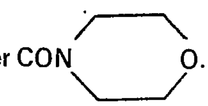

Methylenaktive Verbindungen der Formel $H_2R$ sind beispielsweise Verbindungen der Formel

$H_2C{<}^{CN}_{Y}$

wobei Y die angegebene Bedeutung hat sowie die Verbindungen der Formeln:

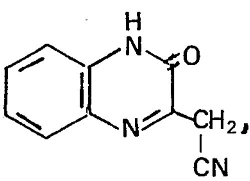 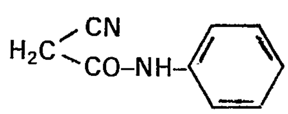 , 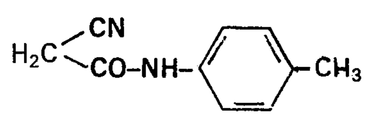 ,

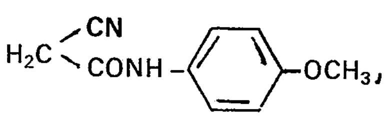 , 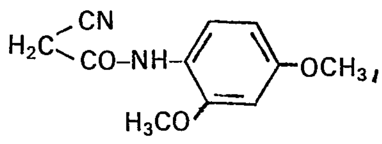 , 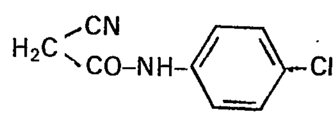 ,

$CH_2{<}^{CN}_{CON(CH_3)_2}$ , 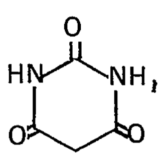 , 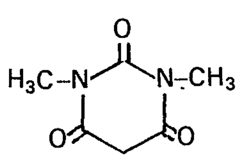 , 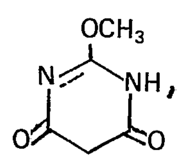 ,

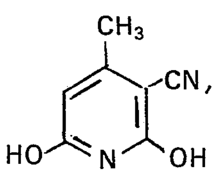 , 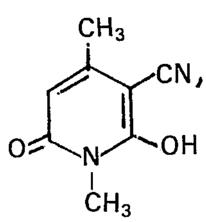 , 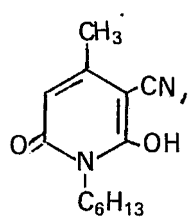 , 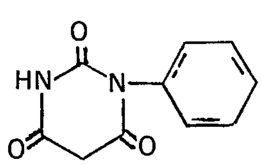 ,

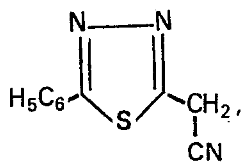 , 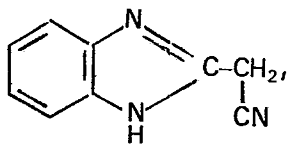 , 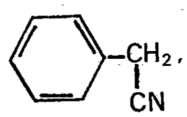 , 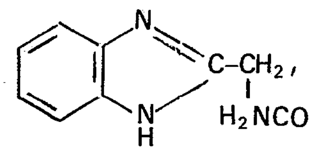 ,

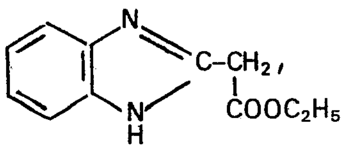 , 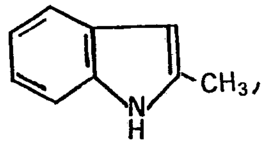 , 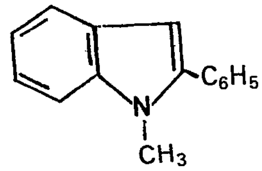 ,

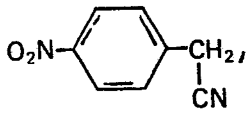 , 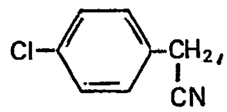 , 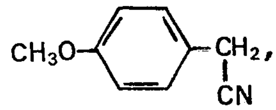 , 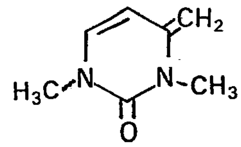 ,

$CH_3$–$NO_2$, $C_2H_5$–$NO_2$, 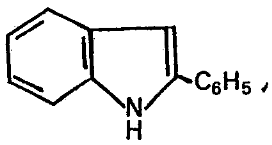 , 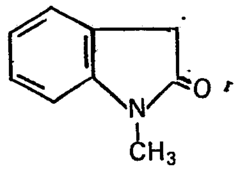 , 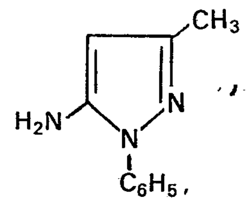 ,

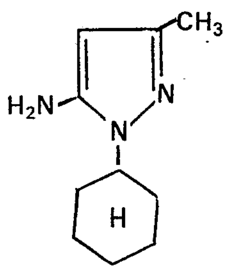 , 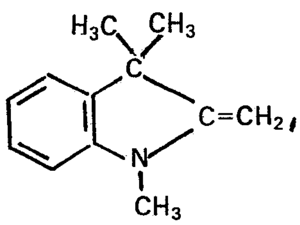 , 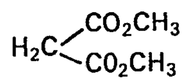 , 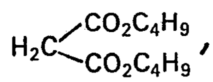 ,

oder 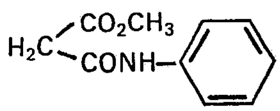 .

Einzelne besonders wichtige Verbindungen der Formel

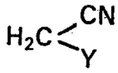 sind z.B.:

$H_2C(CN)_2$ , 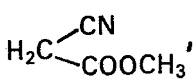 , 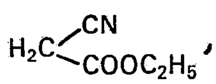 , 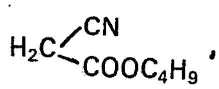 , 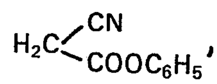 ,

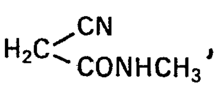 , 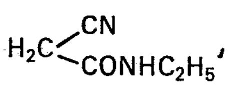 , 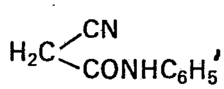 , 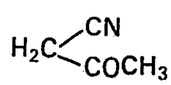 oder 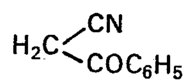

sowie 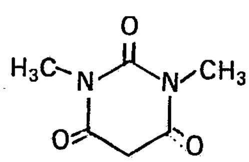 , 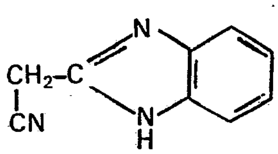 , 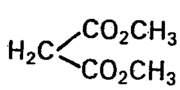 , 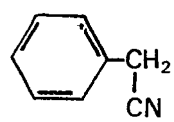

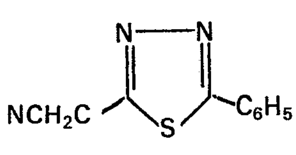 oder 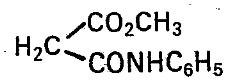 .

Die Kupplungskomponenten der Formel HK stammen vorzugsweise aus der Anilin-, α-Naphthylamin-, Pyrazol-, Aminopyrazol-, Indol-, Thiazol-, Phenol-, Naphthol-, Pyridon- oder Pyridinreihe, wobei solche der Anilin-, Pyrazol- oder Thiazolreihe bevorzugt sind.

Die Kupplungskomponenten HK entsprechen insbesondere den allgemeinen Formeln

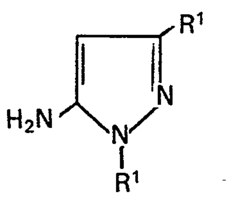 , 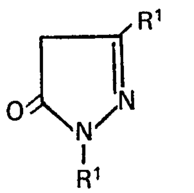 , 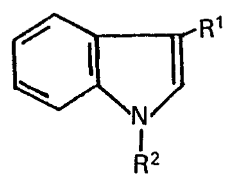 , 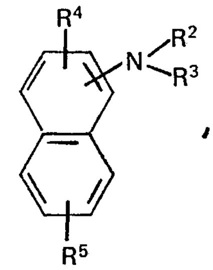 ,

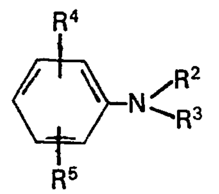 , 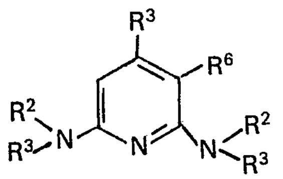 , 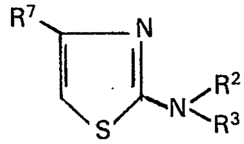 oder 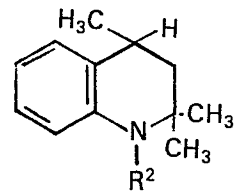

wobei

$R^1$ Wasserstoff, Alkyl, Aralkyl oder Aryl,

$R^2$ Wasserstoff oder $R^3$,

$R^3$ gegebenenfalls substituiertes Alkyl, Cycloalkyl, Alkenyl, Aralkyl oder Aryl, $R^2$ und $R^3$ zusammen mit dem Stickstoff einen gesättigten Heterocyclus,

$R^4$ und $R^5$ unabhängig voneinander Wasserstoff, Alkyl, Alkoxy, Phenoxy, Halogen, Alkylsulfonylamino, Dialkylaminosulfonylamino oder Acylamino,

$R^6$ Cyan, Carbamoyl, Nitro oder Carbalkoxy und

$R^7$ gegebenenfalls substituiertes Phenyl, Alkyl oder Aralkyl sind.

Einzelne Reste $R^1$ sind neben den bereits genannten beispielsweise Methyl, Ethyl, Propyl, Butyl, Benzyl, Phenethyl, Phenyl, o-, m-, p-Tolyl oder o-, m-, p-Chlorphenyl.

Reste $R^3$ sind neben den bereits genannten z.B. $C_1$- bis $C_6$-Alkylgruppen, die durch Chlor, Brom, Hydroxy, $C_1$- bis $C_8$-Alkoxy, Phenoxy, Cyan, Carboxy, $C_1$- bis $C_8$-Alkanoyloxy, $C_1$- bis $C_8$-Alkoxy-$C_1$–$C_4$-alkoxy, Benzoyloxy, o-, m-, p-Methylbenzoyloxy, o-, m-, p-Chlorbenzoyloxy, $C_1$- bis $C_8$-Alkoxyalkanoyloxy, Phenoxyalkanoyloxy, $C_1$- bis $C_8$-Alkoxycarbonyloxy, $C_1$- bis $C_8$-Alkoxyalkoxycarbonyloxy, Benzyloxycarbonyloxy, Phenethyloxycarbonyloxy, Phenoxyethoxycarbonyloxy, $C_1$- bis $C_8$-Alkylaminocarbonyloxy, Cyclohexylaminocarbonyloxy, Phenylaminocarbonyloxy, $C_1$- bis $C_8$-Alkoxycarbonyl,

$C_1$- bis $C_8$-Alkoxyalkoxycarbonyl, Phenoxycarbonyl, Benzyloxycarbonyl, Phenoxy-$C_1$–$C_4$-alkoxy oder Phenethyloxycarbonyl substituiert sein können sowie Phenyl, Benzyl, Phenethyl oder Cyclohexyl.

Einzelne Reste $R^3$ sind z.B. Methyl, Ethyl, Propyl, Butyl, Pentyl, Hexyl, Allyl, Methallyl, 2-Chlorethyl, 2-Bromethyl, 2-Cyanethyl, 2-Hydroxyethyl, 2-Phenyl-2-hydroxyethyl, 2,3-Dihydroxypropyl, 2-Hydroxypropyl, 2-Hydroxybutyl, 2-Hydroxy-3-phenoxypropyl, 2-Hydroxy-3-methoxypropyl, 2-Hydroxy-3-butoxypropyl, 3-Hydroxypropyl, 2-Methoxyethyl, 2-Ethoxyethyl, 2-Propoxyethyl, 2-Butoxyethyl, 2-Phenoxyethyl, 2-Phenoxypropyl, 2-Acetoxyethyl, 2-Propionyloxyethyl, 2-Butyryloxyethyl, 2-Isobutyryloxyethyl, 2-Methoxymethylcarbonyloxyethyl, 2-Ethoxymethylcarbonyloxyethyl, 2-Phenoxymethylcarbonyloxyethyl, 2-Methoxycarbonyloxyethyl, 2-Ethoxycarbonyloxyethyl, 2-Propoxycarbonyloxyethyl, 2-Butoxycarbonyloxyethyl, 2-Phenyloxycarbonyloxyethyl, 2-Benzyloxycarbonyloxyethyl, 2-Methoxyethoxycarbonyloxyethyl, 2-Ethoxyethoxycarbonyloxyethyl, 2-Propoxyethoxycarbonyloxyethyl, 2-Butoxyethoxycarbonyloxyethyl, 2-Methylaminocarbonyloxyethyl, 2-Ethylaminocarbonyloxyethyl, 2-Propylaminocarbonyloxyethyl, 2-Butylaminocarbonyloxyethyl, 2-Methoxycarbonylethyl, 2-Ethoxycarbonylethyl, 2-Propoxycarbonylethyl, 2-Butoxycarbonylethyl, 2-Phenoxycarbonylethyl, 2-Benzyloxycarbonylethyl, 2-β-Phenylethoxycarbonylethyl, 2-Methoxyethoxycarbonylethyl, 2-Ethoxyethoxycarbonylethyl, 2-Propoxyethoxycarbonylethyl, 2-Butoxyethoxycarbonylethyl, 2-Phenoxyethoxycarbonylethyl oder 2-Benzoylethyl.

$R^2$ und $R^3$ zusammen mit dem Stickstoff sind z.B. Pyrrolidino, Piperidino oder Morpholino.

Als Reste $R^4$ und $R^5$ kommen beispielsweise Wasserstoff, Methyl, Ethyl, Propyl, Brom, Chlor, Methoxy, Ethoxy, Phenoxy, Benzyloxy, $C_1$- bis $C_6$-Alkanoylamino, Benzylamino sowie $C_1$- bis $C_4$-Alkylsulfonylamino oder -Dialkylaminosulfonylamino in Betracht.

Reste $R^6$ sind neben den bereits genannten z.B. Aminocarbonyl, Methylaminocarbonyl, Dimethylaminocarbonyl, Ethylaminocarbonyl, Diethylaminocarbonyl, Methoxycarbonyl, Ethoxycarbonyl, n- und i-Propoxycarbonyl, n-, i- und sek.-Butoxycarbonyl, Methoxyethoxycarbonyl,

Ethoxyethoxycarbonyl, n- und i-Propoxyethoxycarbonyl oder n-, i- und sek.-Butoxyethoxycarbonyl.

Reste $R^7$ sind beispielsweise durch $C_1$- bis $C_{10}$-Alkyl, $C_1$- bis $C_{10}$-Alkoxy, Phenoxy, Benzyloxy, Phenyl, Chlor, Brom, Nitro, $C_1$- bis $C_4$-Alkoxycarbonyl, $C_1$- bis $C_4$-Mono- oder Dialkylamino, $C_1$- bis $C_4$-Alkoxy-ethoxy, $C_1$- bis $C_4$-Alkyl- oder Phenylmercapto, $C_1$- bis $C_5$-Alkanoylamino, wie Acetylamino, Propionylamino, Butyrylamino oder Valerylamino, ein- oder mehrfach substituiertes Phenyl, $C_1$- bis $C_4$-Alkyl, $C_1$- bis $C_4$-Alkoxycarbonylmethyl, Cyanmethyl oder Benzyl.

Die Verbindungen der Formel I haben gelbe bis blaue Farbtöne und eignen sich insbesondere zum Färben von Polyestern, Polyamiden, Celluloseestern und Mischgeweben aus Polyestern und Cellulosefasern. Man erhält Färbungen mit in der Regel guten bis sehr guten Echtheiten insbesondere auf Polyestern.

Zur Herstellung der Verbindungen der Formel I kann man die 5-Formylverbindungen der Diazokomponenten der Formel

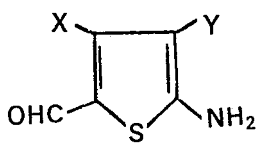

mit Verbindungen der Formel

$H_2R$

nach an sich bekannten Methoden zu Verbindungen der Formel II

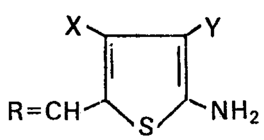

II

kondensieren, diese auf übliche Weise diazotieren und mit den Kupplungskomponenten KH umsetzen.

Man kann aber auch Diazokomponenten der Formel

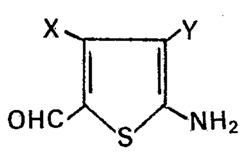

zuerst diazotieren und mit den Kupplungskomponenten KH zu Monoazofarbstoffen der Formel III

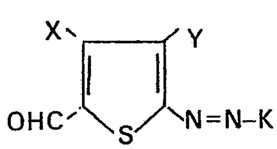

III

umsetzen, die dann mit Verbindungen der Formel

$H_2R$

zu den Methinazofarbstoffen der Formel I

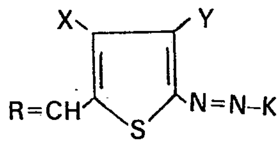

I

kondensiert werden.

Einzelheiten der Herstellung können den Beispielen entnommen werden, in denen sich Angaben über Teile und Prozente, sofern nicht anders vermerkt, auf das Gewicht beziehen.

Von besonderer Bedeutung sind Verbindungen der Formel Ia

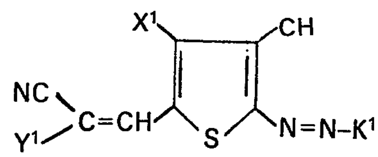

Ia

in der

$K^1$ der Rest einer Kupplungskomponente der Anilin- oder Thiazolreihe,

$X^1$ Wasserstoff, $C_1$- bis $C_8$-Alkyl, Benzyl, Phenethyl, gegebenenfalls durch Chlor, Brom, Methyl, Ethyl, Methoxy oder Ethoxy substituiertes Phenyl, Thienyl oder Furyl und

$Y^1$ Cyan, Carbonester oder substituiertes Carbamoyl sind.

Beispiel 1

a) 8,3 Teile 2-Amino-3-cyan-4-methyl-5-formyl-thiophen wurden in einer Mischung aus 56,3 Volumenteilen Eisessig und 18,7 Volumenteilen Propionsäure verrührt. Nach Zugabe von 25 Volumenteilen 85%iger Schwefelsäure liess man bei 0–5 °C unter Rühren langsam 16 Teile Nitrosylschwefelsäure (11,5% $N_2O_3$) zulaufen und 4 Stunden bei gleicher Temperatur rühren. Die so erhaltene Diazoniumsalzlösung liess man in eine Lösung von 9,75 Teilen N-Cyanethyl-N-ethyl-m-toluidin in einer Mischung aus 125 Teilen Wasser, 500 Teilen Eis, 25 Volumenteilen 32%iger Salzsäure und 1 Teil Amidosulfonsäure langsam einfliessen. Nach Beendigung der Kupplung wurde der Farbstoff abgesaugt, neutral gewaschen und getrocknet. Man erhielt 15 Teile des Farbstoffs der Formel

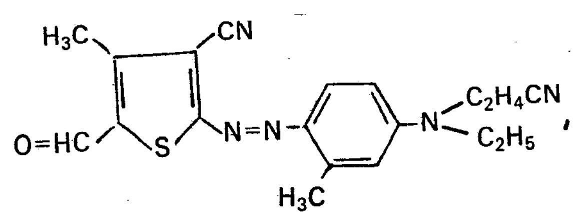

,

der Polyesterfasern in violetten Nuancen anfärbt.

b) 6,2 Teile des in Beispiel 1a beschriebenen Farbstoffs wurden in 45 Volumenteilen Dioxan gelöst, mit 3,8 Teilen Cyanessigsäureethylester, 1,5 Teilen Eisessig und 1,5 Teilen Piperidin versetzt und 16 Stunden bei Raumtemperatur gerührt. Anschliessend wurden 50 Teile Wasser und

50 Teile Eis zugegeben, 1 Stunde gerührt, das Produkt abgesaugt und mit Wasser neutral gewaschen. Nach den Trocknen im Vakuum bei 40 °C erhielt man 7 Teile des Farbstoffs der Formel

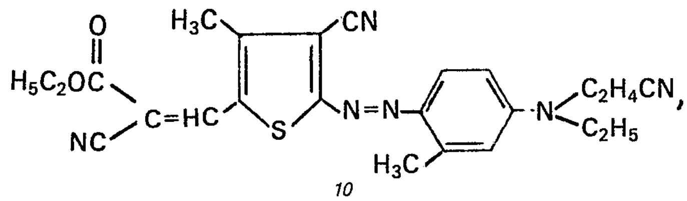

der Polyesterfasern in dunkelblauen Nuancen mit guter Licht- und Thermofixierechtheit färbt.

Beispiel 2

7,6 Teile 2-Amino-3-cyan-5-formyl-thiophen wurden analog Beispiel 1a) mit 9,7 Teilen N-Cyanethyl-N-ethyl-m-toluidin zu 13 Teilen des Farbstoffs der Formel

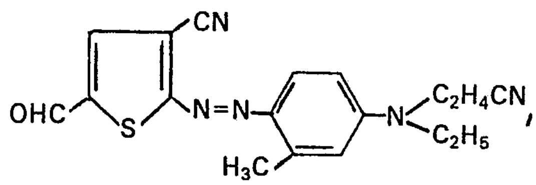

umgesetzt. 6,0 Teile dieses Farbstoffs wurden in 45 Volumenteilen Dioxan mit 3,8 Teilen Cyanessigsäureethylester, 1,5 Teilen Eisessig und 1,5 Teilen Piperidin versetzt und 16 Stunden bei Raumtemperatur gerührt. Anschliessend wurde der Farbstoff durch Zugabe von 50 Teilen Wasser und 50 Teilen Eis gefällt, 1 Stunde gerührt, abgesaugt und mit Wasser neutral gewaschen. Nach dem Trocknen erhielt man 7 Teile des Farbstoffs der Formel

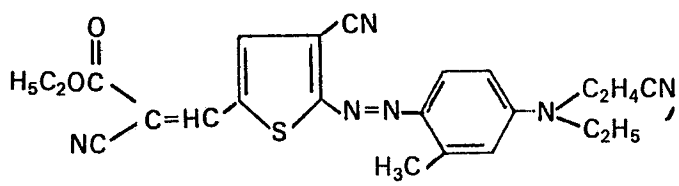

der Polyester in dunkelblauen Nuancen mit guten Echtheiten färbt.

Beispiel 3

12,4 Teile des Farbstoffs der Formel

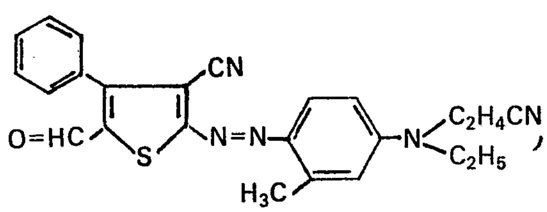

wurden in 80 Volumenteilen Dioxan mit 6,8 Teilen Cyanessigsäureethylester, 2,5 Teilen Eisessig und 2,5 Teilen Piperidin 16 Stunden bei Raumtemperatur gerührt. Danach wurde mit 200 Teilen Eis/Wasser-Mischung verdünnt, abfiltriert und getrocknet. Es wurden 14,7 Teile des Farbstoffs der Formel

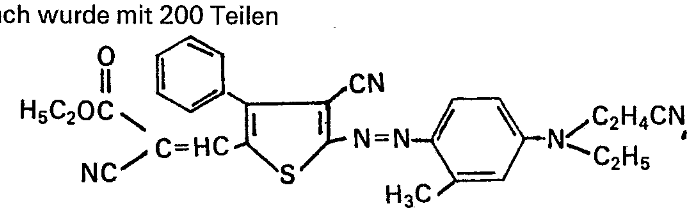

erhalten, der auf Polyester licht- und thermofixierechte dunkelblaue Färbungen ergibt.

Beispiel 4

13,5 Teile des Farbstoffs der Formel

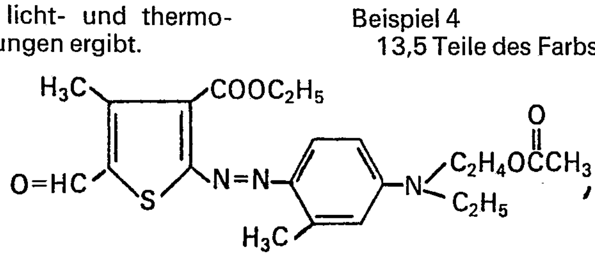

wurden analog Beispiel 1 mit 7,5 Teilen Cyanessigsäure-n-butylester zu 14 Teilen des Farbstoffs der Formel

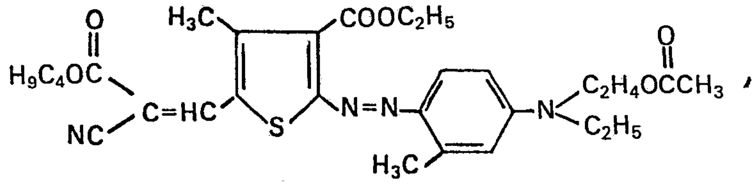

umgesetzt. Auf Polyester erhielt man dunkelblaue Färbungen mit allgemein guten Echtheiten.

Beispiel 5

8,3 Teile 2-Amino-3-cyan-4-methyl-5-formylthiophen wurden analog Beispiel 1a) mit 12,3 Teilen N,N-Diethyl-3-amino-acetanilid zu 14 Teilen des Farbstoffs der Formel

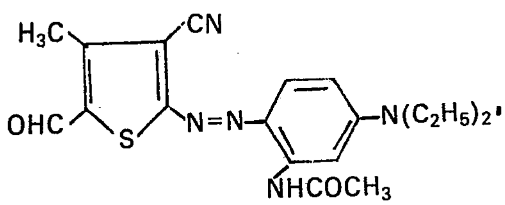

umgesetzt. 6,5 Teile dieser Verbindung wurden in 45 Volumenteilen Dioxan gelöst, mit 3,8 Teilen Cyanessigsäureethylester, 1,5 Teilen Eisessig und 1,5 Teilen Piperidin versetzt und 16 Stunden bei Raumtemperatur gerührt. Aufarbeitung analog Beispiel ergab 7 Teile des Farbstoffs der Formel

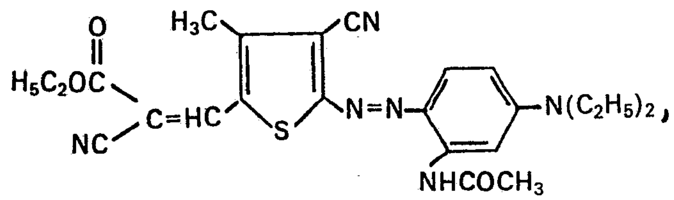

der auf Polyester klare blaue Färbungen liefert, die sich insbesondere durch eine sehr gute Licht- und Thermofixierechtheit auszeichnen.

Analog den Beispielen 1–5 erhält man die in der folgenden Tabelle gekennzeichneten Farbstoffe.

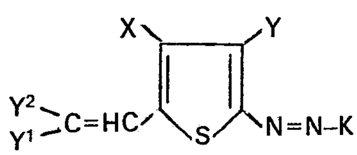

| Bsp. Nr. | X | Y | $Y^1$ | $Y^2$ | K | *) |
|---|---|---|---|---|---|---|
| 6 | H | CN | $COOC_2H_5$ | $COOC_2H_5$ | 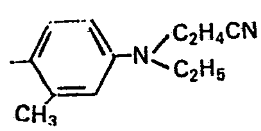 | dunkelblau |
| 7 | H | CN | $COOC_2H_5$ | $COOC_2H_5$ | 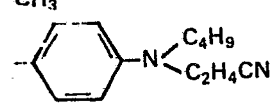 | blauviolett |
| 8 | H | CN | $COOC_2H_5$ | $COOC_2H_5$ | 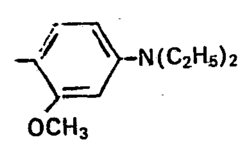 | dunkelblau |

*) Färbung auf Polyester

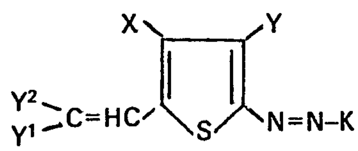

| Bsp. Nr. | X | Y | $Y^1$ | $Y^2$ | K | *) |
|---|---|---|---|---|---|---|
| 9 | H | CN | $COOC_2H_5$ | $COOC_2H_5$ | 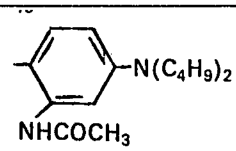 | blau |
| 10 | H | CN | CN | CN | 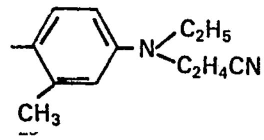 | dunkelblau |
| 11 | H | CN | $COCH_3$ | $COOC_2H_5$ | 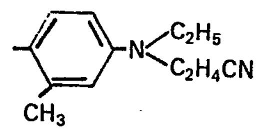 | dunkelblau |
| 12 | H | $COOC_2H_5$ | CN | $COOC_2H_5$ | 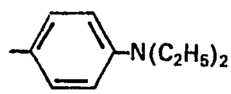 | blauviolett |
| 13 | H | $COOC_2H_5$ | CN | $COOC_2H_5$ | 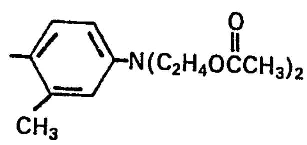 | dunkelblau |
| 14 | H | $COOC_2H_5$ | CN | $COOC_2H_5$ | 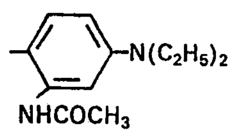 | blau |
| 15 | H | $COOC_2H_5$ | $COOC_2H_5$ | $COOC_2H_5$ | 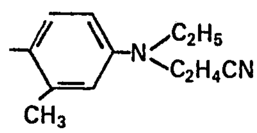 | dunkelblau |
| 16 | H | $COOC_2H_5$ | $COCH_3$ | $COOC_2H_5$ | 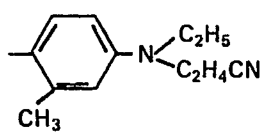 | dunkelblau |
| 17 | H | $COOC_2H_5$ | $COCH_3$ | $COCH_3$ | 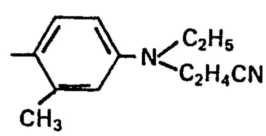 | blauviolett |
| 18 | H | $COOC_2H_5$ | $COCH_3$ | CN | 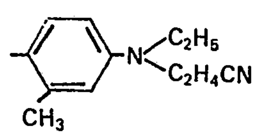 | dunkelblau |
| 19 | H | $C(=O)-NH_2$ | CN | $COOC_2H_5$ | 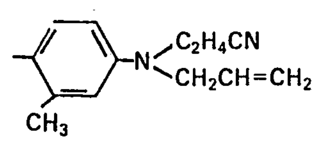 | dunkelblau |

*) Färbung auf Polyester

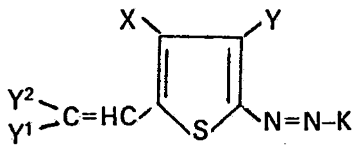

| Bsp. Nr. | X | Y | $Y^1$ | $Y^2$ | K | *) |
|---|---|---|---|---|---|---|
| 20 | H | 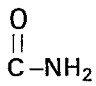 | CN | $COOC_2H_5$ | 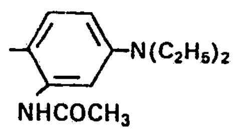 | blau |
| 21 | H | $SO_2CH_3$ | CN | $COOC_2H_5$ | 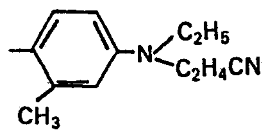 | dunkelblau |
| 22 | H | $SO_2CH_3$ | CN | $COOC_2H_5$ | 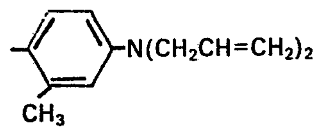 | dunkelblau |
| 23 | H | $SO_2CH_3$ | CN | $COOC_2H_5$ | 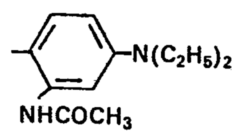 | blau |
| 24 | H | CN | CN | $COOC_2H_5$ | 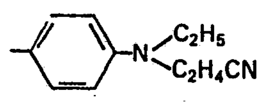 | blauviolett |
| 25 | H | CN | CN | $COOC_2H_5$ | 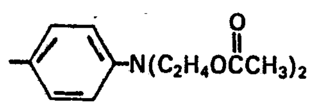 | blauviolett |
| 26 | H | CN | CN | $COOC_2H_5$ | 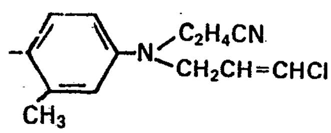 | dunkelblau |
| 27 | H | CN | CN | $COOC_2H_5$ | 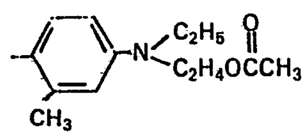 | dunkelblau |
| 28 | H | CN | CN | $COOC_2H_5$ | 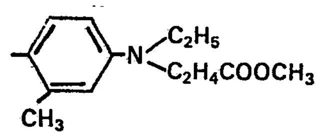 | dunkelblau |
| 29 | H | CN | CN | $COOC_2H_5$ | 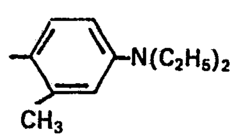 | dunkelblau |
| 30 | H | CN | CN | $COOC_2H_5$ | 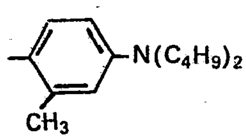 | dunkelblau |

*) Färbung auf Polyester

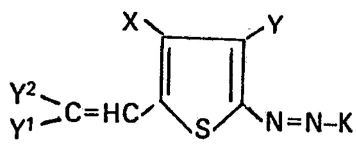

| Bsp. Nr. | X | Y | $Y^1$ | $Y^2$ | K | *) |
|---|---|---|---|---|---|---|
| 31 | H | CN | CN | $COOC_2H_5$ | 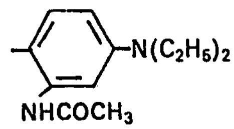 | blau |
| 32 | H | CN | CN | $COOC_2H_5$ | 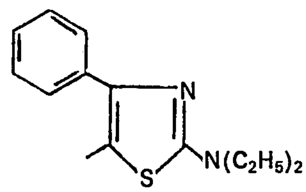 | blau |
| 33 | H | CN | CN | $COOC_2H_5$ | 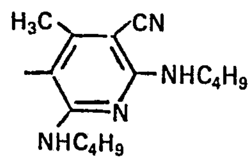 | blau |
| 34 | $CH_3$ | CN | CN | $COOC_2H_5$ | 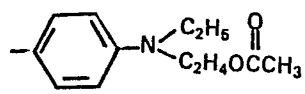 | blauviolett |
| 35 | $CH_3$ | CN | CN | $COOC_2H_5$ | 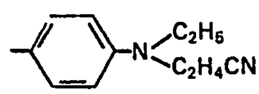 | blauviolett |
| 36 | $CH_3$ | CN | CN | $COOC_2H_5$ | 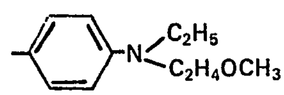 | blauviolett |
| 37 | $CH_3$ | CN | CN | $COOC_2H_5$ | 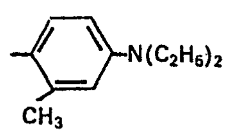 | dunkelblau |
| 38 | $CH_3$ | CN | CN | $COOC_2H_5$ | 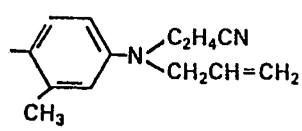 | dunkelblau |
| 39 | $CH_3$ | CN | CN | $COOC_2H_5$ | 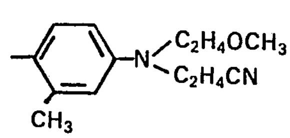 | dunkelblau |
| 40 | $CH_3$ | CN | CN | $COOC_2H_5$ | 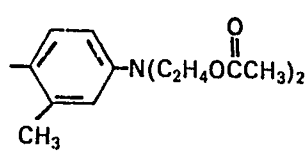 | dunkelblau |
| 41 | $CH_3$ | CN | CN | $COOC_2H_5$ | 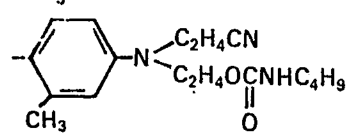 | dunkelblau |

*) Färbung auf Polyester

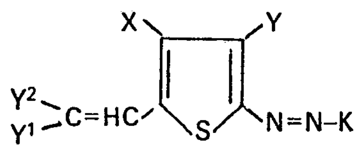

| Bsp. Nr. | X | Y | $Y^1$ | $Y^2$ | K | *) |
|---|---|---|---|---|---|---|
| 42 | $CH_3$ | CN | CN | $COOC_2H_5$ | 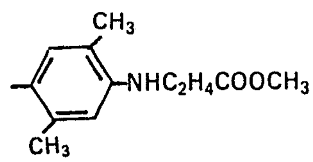 | dunkelblau |
| 43 | $CH_3$ | CN | CN | $COOC_4H_9(n)$ | 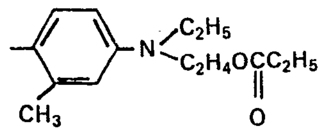 | dunkelblau |
| 44 | $CH_3$ | CN | CN | $COOC_4H_9(n)$ | 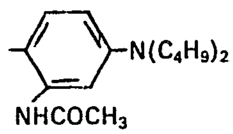 | blau |
| 45 | $CH_3$ | CN | CN | $COOC_4H_9(n)$ | 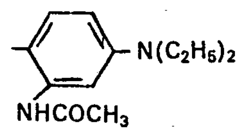 | blau |
| 46 | $CH_3$ | CN | CN | $COOC_4H_9(n)$ | 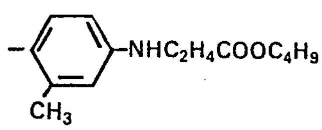 | blau |
| 47 | $CH_3$ | CN | CN | $COOC_4H_9(n)$ | 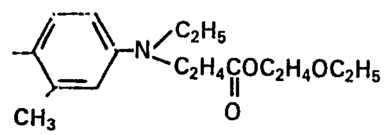 | dunkelblau |
| 48 | $CH_3$ | CN | CN | CO–NH– 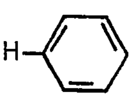 | 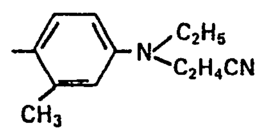 | dunkelblau |
| 49 | $CH_3$ | CN | CN | 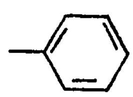 | 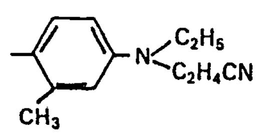 | dunkelblau |
| 50 | $CH_3$ | CN | CN | 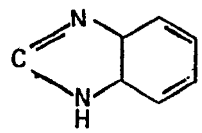 | 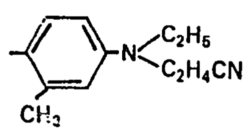 | dunkelblau |
| 51 | $CH_3$ | CN | CN | $CONH_2$ | 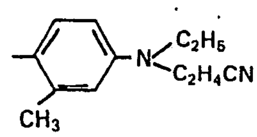 | dunkelblau |
| 52 | $CH_3$ | CN | $COOC_2H_5$ | $COOC_2H_5$ | 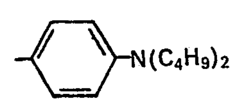 | marineblau |

*) Färbung auf Polyester

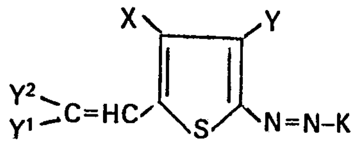

| Bsp. Nr. | X | Y | $Y^1$ | $Y^2$ | K | *) |
|---|---|---|---|---|---|---|
| 53 | $CH_3$ | CN | $COCH_3$ | $COOC_2H_5$ | 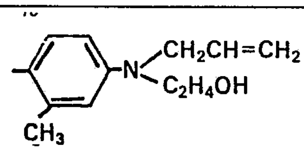 | dunkelblau |
| 54 | $CH_3$ | CN | CN | $CONHCH_3$ | // | dunkelblau |
| 55 | $CH_3$ | $COOC_2H_5$ | CN | CN | 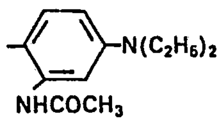 | blau |
| 56 | $CH_3$ | $COOC_2H_5$ | CN | $COOC_4H_9$ | 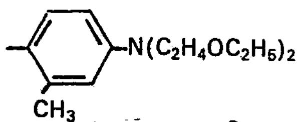 | dunkelblau |
| 57 | $CH_3$ | $COOC_2H_5$ | CN | $CON(CH_3)_2$ | 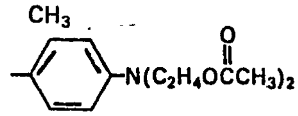 | blauviolett |
| 58 | $CH_3$ | $CONH_2$ | CN | $COOC_2H_5$ | 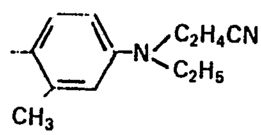 | dunkelblau |
| 59 | $CH_3$ | $SO_2CH_3$ | CN | $COOC_2H_5$ | 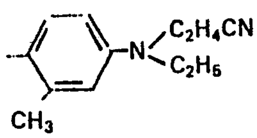 | dunkelblau |
| 60 | $CH_3$ | $CON(CH_3)_2$ | CN | $COOC_2H_5$ | 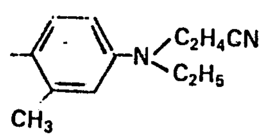 | dunkelblau |
| 61 | $CH_3$ | CN | CN | $COOC_2H_5$ | 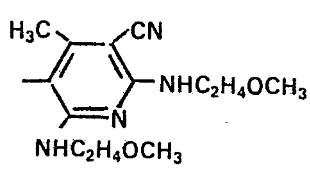 | dunkelblau |
| 62 | $CH_3$ | CN | CN | $COOC_2H_5$ | 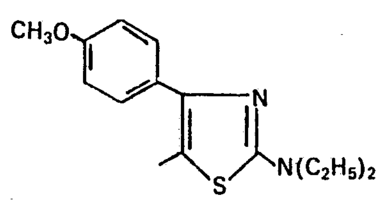 | marineblau |

*) Färbung auf Polyester

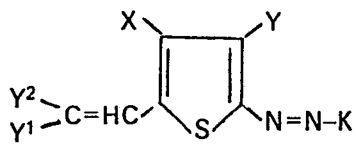

| Bsp. Nr. | X | Y | $Y^1$ | $Y^2$ | K | *) |
|---|---|---|---|---|---|---|
| 63 | $CH_3$ | CN | CN | $COOCH_3$ | 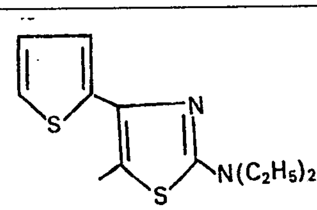 | marineblau |
| 64 | $CH_3$ | CN | CN | $COOCH_3$ | 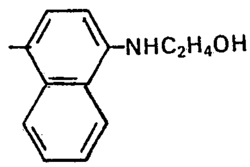 | marineblau |
| 65 | $CH_3$ | CN | CN | $COOC_2H_5$ | 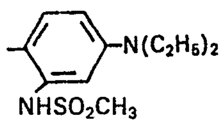 | marineblau |
| 66 | $CH_3$ | CN | CN | $COOC_2H_5$ | 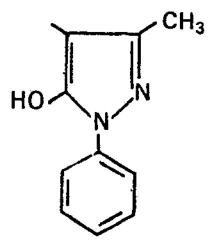 | violett |
| 67 | $CH_3$ | CN | CN | $COOC_2H_5$ | 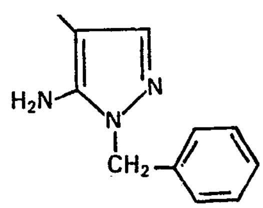 | violett |
| 68 | $CH_3$ | CN | CN | $COOC_2H_5$ | 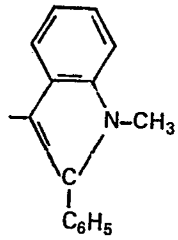 | violett |
| 69 | $CH_3$ | CN | CN | $CONHCH_3$ | 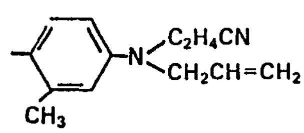 | dunkelblau |
| 70 | $CH_3$ | CN | CN | $CONHC_2H_5$ | 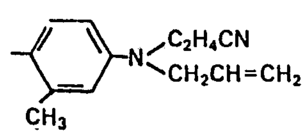 | dunkelblau |

*) Färbung auf Polyester

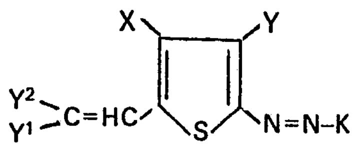

| Bsp. Nr. | X | Y | $Y^1$ | $Y^2$ | K | *) |
|---|---|---|---|---|---|---|
| 71 | $CH_3$ | CN | CN | $SO_2CH_3$ | 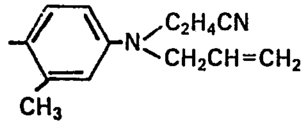 | dunkelblau |
| 72 | $CH_3$ | CN | CN | $COCH_3$ | 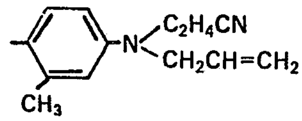 | dunkelblau |
| 73 | $CH_3$ | CN | CN | $COOCH_3$ | 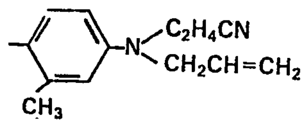 | dunkelblau |
| 74 | $CH_3$ | CN | CN | | 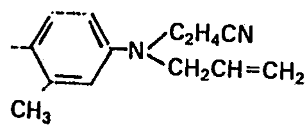 | dunkelblau |
| 75 | $C_6H_5$ | CN | CN | $COOC_2H_5$ | 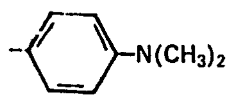 | dunkelblau |
| 76 | $C_6H_5$ | CN | CN | $COOC_2H_5$ | 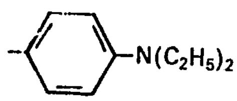 | dunkelblau |
| 77 | $C_6H_5$ | CN | CN | $COOC_2H_5$ | 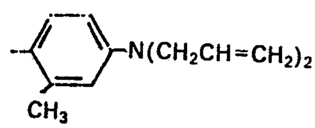 | dunkelblau |
| 78 | $C_6H_5$ | CN | CN | $COOC_2H_5$ | 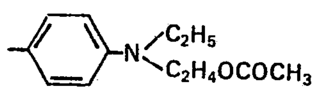 | dunkelblau |
| 79 | $C_6H_5$ | CN | CN | $COOC_2H_5$ | 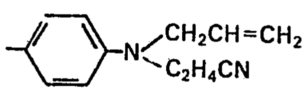 | dunkelblau |
| 80 | $C_6H_5$ | $COOC_2H_5$ | CN | $COOC_2H_5$ | 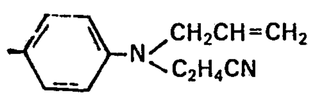 | dunkelblau |
| 81 | 4–$CH_3O$– $C_6H_4$– | CN . | CN | $COOC_2H_5$ | 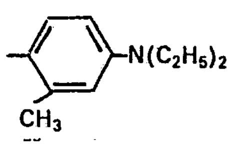 | marineblau |
| 82 | 4–$CH_3$– $C_6H_4$– | CN | CN | $COOC_2H_5$ | 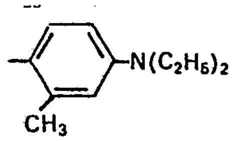 | marineblau |

*) Färbung auf Polyester

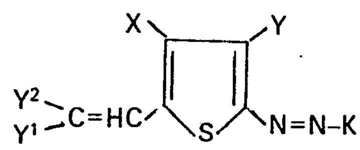

| Bsp. Nr. | X | Y | $Y^1$ | $Y^2$ | K | *) |
|---|---|---|---|---|---|---|
| 83 | 4–Cl–$C_6H_4$– | CN | CN | $COOC_2H_5$ | 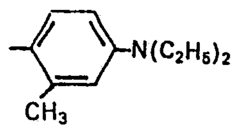 | marineblau |

*) Färbung auf Polyester

Beispiel 84

a) 25 Teile 2-Amino-3-cyan-4-methyl-5-formyl-thiophen wurden in 200 Volumenteilen Ethanol gelöst und mit 2 Teilen Eisessig sowie 2 Teilen Piperidin versetzt. Anschliessend liess man bei Raumtemperatur 50 Volumenteile Cyanessigsäureethylester zutropfen und rührte 7 Stunden bei 60 °C. Der Ansatz wurde in 500 Teile einer Eis/Wassermischung eingerührt, der Niederschlag abgesaugt, mit Wasser gewaschen und bei 60 °C im Vakuum getrocknet. Man erhielt 31,5 Teile 2-Amino-3-cyan-4-methyl-5- ( (β-cyan-β -carboethoxy) -vinyl) -thiophen der Formel

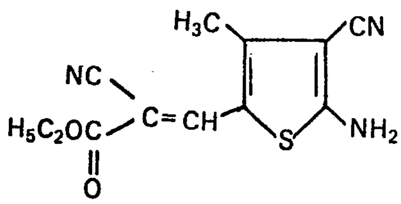

das ohne weitere Reinigung umgesetzt wird.

b) 13 Teile 2-Amino-3-cyan-4-methyl-5-( (β-cyan-β-carboethoxy)-vinyl)-thiophen wurden in 100 Volumenteilen Phosphorsäure 85% suspendiert und bei 0–5 °C langsam mit 16 Teilen Nitrosylschwefelsäure (11,5% $N_2O_3$) versetzt. Nach 2 h bei 0–5 °C liess man die Diazoniumsalzlösung in eine Lösung von 9,75 Teilen N-Cyanethyl-N-ethyl-m-toluidin in einer Mischung aus 125 Teilen Wasser, 500 Teilen Eis, 25 Volumenteilen 32%iger Salzsäure und 1 Teil Amidosulfonsäure einfliessen. Nach Beendigung der Kupplung wurde der Farbstoff abgesaugt, neutral gewaschen und im Vakuum getrocknet. Man erhielt 20 Teile des in Beispiel 1b) beschriebenen Farbstoffs der Formel

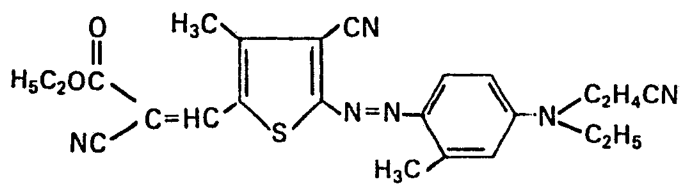

Beispiel 85

16,2 Teile 2-Amino-3-cyan-4-phenyl-5-( (β-cyan-β-carboethoxy)-vinyl)-thiophen wurden in 160 Volumenteilen Phosphorsäure 85% suspendiert und bei 0–5 °C mit 16 Teilen Nitrosylschwefelsäure (11,5% $N_2O_3$) diazotiert. Nach 2 h bei 0–5 °C setzt man die Diazoniumsalzlösung analog Beispiel mit 9,75 Teilen N-Cyanethyl-N-ethyl-m-toluidin zu 23 Teilen des Farbstoffs der Formel

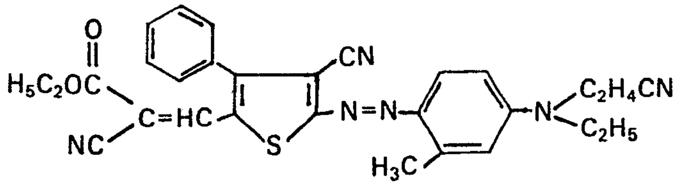

um, mit dem auf Polyester marineblaue Färbungen mit guter Licht- und Thermofixierechtheit erhalten wurden.

Beispiel 86

11,6 Teile 2-Amino-3-cyan-5-( (β-cyan-β-methylaminocarbonyl)-vinyl)-thiophen wurden in 120 Volumenteilen Phosphorsäure 85% suspendiert, bei 0–5 °C und 16 Teilen Nitrosylschwefelsäure umgesetzt und 2 h bei 0–5 °C gerührt. Die Diazoniumsalzlösung liess man in eine Mischung aus 7,5 Teilen N,N-Diethylanilin, 100 Teilen Wasser, 300 Teilen Eis, 25 Volumenteilen 32%iger Salzsäure und 1 Teil Amidosulfonsäure langsam einfliessen. Nach beendeter Kupplung wurde die Suspension filtriert, neutral gewaschen und getrocknet. Man erhielt 16 Teile des Farbstoffs der Formel

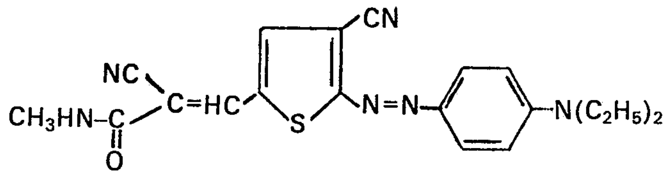

der auf Polyester dunkelblaue Färbungen mit allgemein guten Echtheiten ergibt.

Analog den Beispielen 84–86 wurden auch die in der nachfolgenden Tabelle gekennzeichneten Verbindungen erhalten.

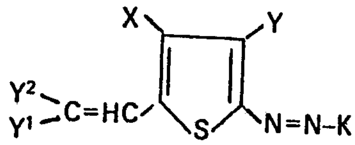

| Bsp. Nr. | X | Y | Y1 | Y2 | K | *) |
|---|---|---|---|---|---|---|
| 87 | H | CN | CN | $COOCH_3$ | 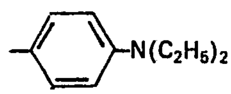 | dunkelblau |
| 88 | H | CN | CN | $COOCH_3$ | 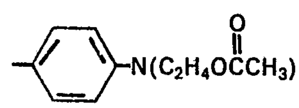 | dunkelblau |
| 89 | H | CN | CN | $COOCH_3$ | 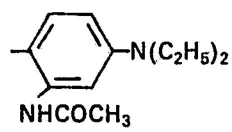 | blau |
| 90 | H | CN | CN | $COOCH_3$ | 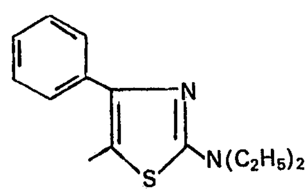 | blau |
| 91 | $CH_3$ | CN | CN | $COOC_2H_5$ | 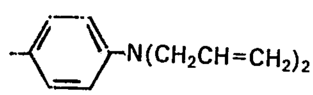 | dunkelblau |
| 92 | $CH_3$ | CN | CN | $COOC_2H_5$ | 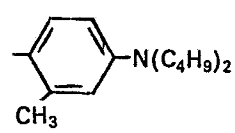 | dunkelblau |
| 93 | $CH_3$ | CN | CN | $COOC_2H_5$ | 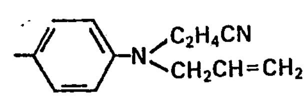 | dunkelblau |
| 94 | $CH_3$ | CN | CN | $COOC_2H_5$ | 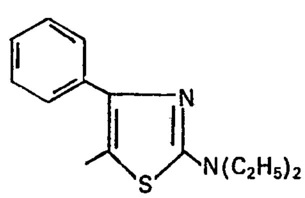 | dunkelblau |

*) Färbung auf Polyester

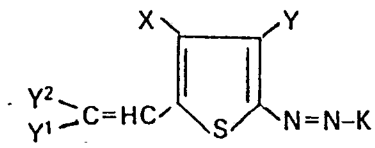

| Bsp. Nr. | X | Y | $Y^1$ | $Y^2$ | K | *) |
|---|---|---|---|---|---|---|
| 95 | $CH_3$ | CN | CN | $CONHCH_3$ | 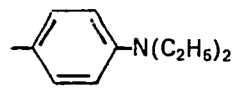 | dunkelblau |
| 96 | $CH_3$ | $COOCH_3$ | CN | $COOC_2H_5$ | 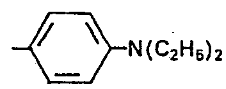 | dunkelblau |
| 97 | $CH_3$ | $SO_2CH_3$ | CN | $COOC_2H_5$ | 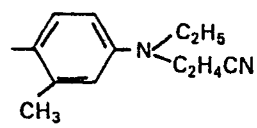 | dunkelblau |
| 98 | $CH_3$ | CN | CN | $COOC_2H_5$ | 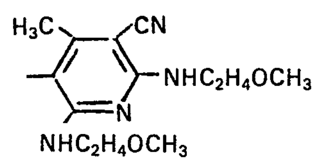 | blauviolett |
| 99 | $C_6H_5$ | CN | CN | $COOC_2H_5$ | 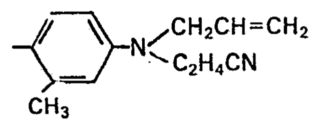 | dunkelblau |
| 100 | $C_6H_5$ | CN | CN | $COOC_2H_5$ | 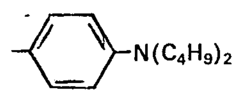 | dunkelblau |
| 101 | $C_6H_5$ | CN | CN | $COOC_2H_5$ | 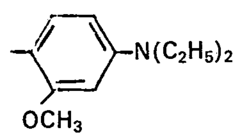 | marineblau |

*) Färbung auf Polyester

Analog zu den beschriebenen Methoden können auch die in der folgenden Tabelle durch die Substituenten charakterisierten Farbstoffe (s. 2. Formel, Seite 10) hergestellt werden.

| Bsp. Nr. | X | Y | $Y^1$ | $Y^2$ | K | *) |
|---|---|---|---|---|---|---|
| 102 | H | CN | CN | $COOC_2H_5$ | 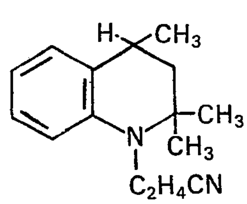 | dunkelblau |

*) Färbung auf Polyester

| Bsp. Nr. | X | Y | $Y^1$ | $Y^2$ | K | *) |
|---|---|---|---|---|---|---|
| 103 | H | CN | CN | $COOC_2H_5$ | 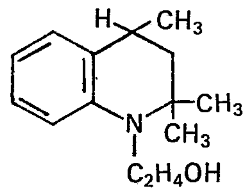 | blau |
| 104 | H | CN | CN | CN | 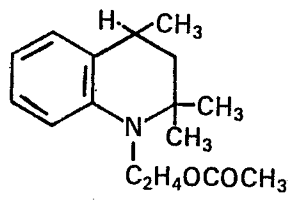 | blau |
| 105 | H | CN | CN | $COOC_2H_5$ | 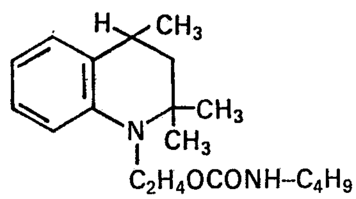 | blau |
| 106 | H | CN | CN | $COOC_2H_5$ | 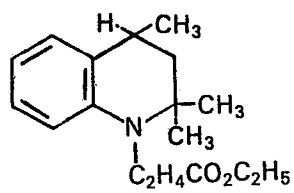 | dunkelblau |
| 107 | H | CN | CN | $COOC_2H_5$ | 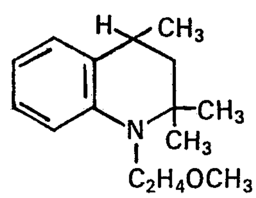 | blau |
| 108 | $CH_3$ | CN | CN | $COOC_2H_5$ | 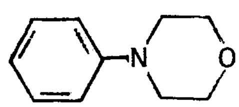 | marineblau |
| 109 | $CH_3$ | CN | CN | $COOC_2H_5$ | 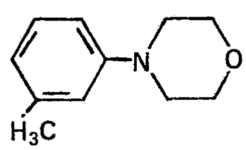 | marineblau |
| 110 | $CH_3$ | CN | CN | CN | 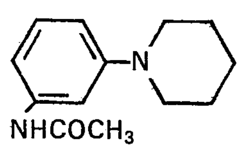 | blau |

*) Färbung auf Polyester

Die folgenden Farbstoffe wurden ausgehend von N,N-Dimethylbarbitursäure erhalten:

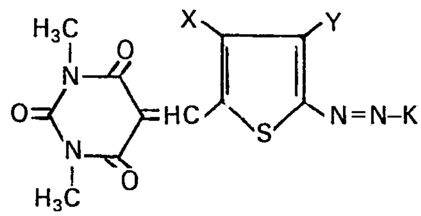

| Bsp.-Nr. | X | Y | K | *) |
|---|---|---|---|---|
| 111 | H | CN | 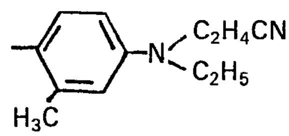 | dunkelblau |
| 112 | $CH_3$ | CN | 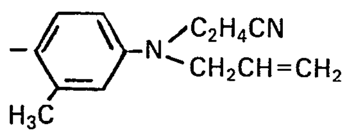 | blauviolett |
| 113 | $C_6H_5$ | CN | 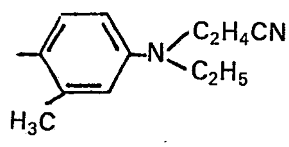 | dunkelblau |
| 114 | $CH_3$ | CN | 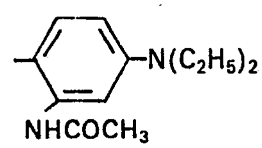 | blau |
| 115 | H | CN | 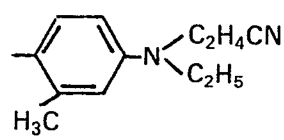 | blauviolett |

* Färbung auf Polyester

**Patentansprüche**

1. Verbindungen der allgemeinen Formel I

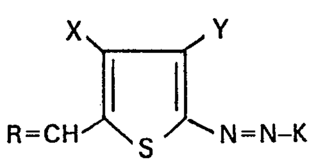

I

in der

K der Rest einer Kupplungskomponente,

R der Rest einer methylenaktiven Verbindung,

X Wasserstoff oder gegebenenfalls substituiertes Alkyl, Aryl oder Hetaryl und

Y Cyan, Nitro, Alkanoyl, Aroyl, Alkylsulfonyl, Arylsulfonyl, Carboxyl, Carbonester oder gegebenenfalls substituiertes Carbamoyl sind.

2. Verbindungen gemäss Anspruch 1 der Formel

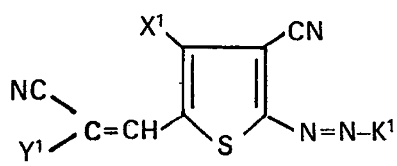

Ia

in der

$K^1$ der Rest einer Kupplungskomponente der Anilin- oder Thiazolreihe,

$X^1$ Wasserstoff, $C_1$- bis $C_8$-Alkyl, Benzyl, Phenethyl, gegebenenfalls durch Chlor, Brom, Methyl, Ethyl, Methoxy oder Ethoxy substituiertes Phenyl, Thienyl oder Furyl und

$Y^1$ Cyan, Carbonester oder substituiertes Carbamoyl sind.

3. Verwendung der Verbindungen gemäss Anspruch 1 zum Färben textiler Fasern, insbesondere von Polyestern.

**Revendications**

1. Composés de formule générale

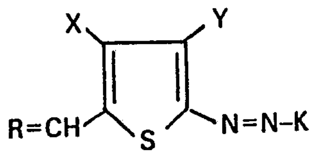

I

dans laquelle

K est le radical d'un composant de copulation,

R est le radical d'un composant à groupement méthylène actif,

X est un atome d'hydrogène ou un radical alkyle, aryle ou hétéroaryle éventuellement substitué et

Y est un groupement cyano, nitro, alcanoyle, aroyle, alkylsulfonyle, arylsulfonyle, carboxyle, ester carboxylique ou carbamoyle éventuellement substitué.

2. Composés selon la revendication 1 de formule

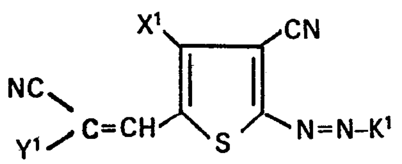

Ia

dans laquelle

$K^1$ est le radical d'un composant de copulation de la série de l'aniline ou du thiazole,

$X^1$ est un atome d'hydrogène, un radical alkyle en $C_1$ à $C_8$, benzyle, phénéthyle, phényle éventuellement substitué par un atome de chlore, de brome, par un groupement méthyle, éthyle, méthoxy ou éthoxy, un radical thiényle ou furyle et

$Y^1$ est un groupement cyano, ester carboxylique ou carbamoyle substitué.

3. Utilisation des composés selon la revendication 1 pour la teinture de fibres textiles, en particulier de polyesters.

**Claims**

1. A compound of the formula I

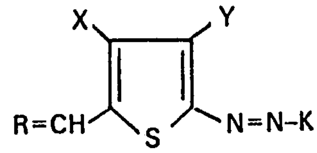

I

where

K is a radical of a coupling component,

R is a radical of an active methylene compound,

X is hydrogen or unsubstituted or substituted alkyl, aryl or hetaryl and

Y is cyano, nitro, alkanoyl, aroyl, alkylsulfonyl, arylsulfonyl, carboxyl, a carboxylic ester group or unsubstituted or substituted carbamyl.

2. A compound as claimed in claim 1, of the formula

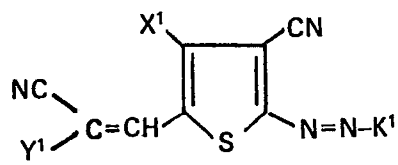

Ia

where

$K^1$ is a radical of a coupling component of the aniline or thiazole series,

$X^1$ is hydrogen, $C_1$–$C_8$-alkyl, benzyl, phenethyl or thienyl, furyl or phenyl which is unsubstituted or substituted by chlorine, bromine, methyl, ethyl, methoxy or ethoxy, and

$Y^1$ is cyano, a carboxylic ester group or substituted carbamyl.

3. Use of a compound as claimed in claim 1 for dyeing textile fibers, in particular polyesters.